Europäisches Patentamt

European Patent Office

Office européen des brevets

(11) Veröffentlichungsnummer: **0 088 372**
**B2**

(19)

(12) # NEUE EUROPÄISCHE PATENTSCHRIFT

(45) Veröffentlichungstag der neuen Patentschrift:
**29.08.90**

(51) Int. Cl.⁵: **C 01 B 33/22**

(21) Anmeldenummer: **83102076.3**

(22) Anmeldetag: **03.03.83**

(54) Verfahren zur Herstellung eines synthetischen Hectorits.

(30) Priorität: **05.03.82 DE 3207886**

(43) Veröffentlichungstag der Anmeldung:
**14.09.83 Patentblatt 83/37**

(45) Bekanntmachung des Hinweises auf die
Patenterteilung:
**05.11.86 Patenblatt 86/45**

(45) Bekanntmachung des Hinweises auf die
Entscheidung über den Einspruch:
**29.08.90 Patentblatt 90/35**

(84) Benannte Vertragsstaaten:
**DE**

(56) Entgegenhaltungen:
**DE-A-2 028 652    GB-A-1 449 129**
**DE-A-2 356 865    GB-A-1 469 710**
**DE-B-1 184 742    US-A-3 586 478**
**DE-B-1 667 502    US-A-3 666 407**

**Römpps Chemie Lexikon, 6. Aufl., 1966, S. 2838**

**Die Akte enthält technische Angaben, die nach
dem Eingang der Anmeldung eingereicht
wurden und die nicht in dieser Patentschrift
enthalten sind.**

(73) Patentinhaber: HOECHST
AKTIENGESELLSCHAFT
Postfach 80 03 20
D-6230 Frankfurt am Main 80 (DE)

(72) Erfinder: **Kalz, Hans-Jürgen, Dr.**
**Gartenstrasse 25**
**D-6238 Hofheim am Taunus (DE)**
Erfinder: **Russow, Jürgen, Dr.**
**Am Schieferberg 45**
**D-6233 Kelkheim (Taunus) (DE)**

EP 0 088 372 B2

**Beschreibung**

Di vorliegende Erfindung betrifft ein Verfahren zur Herstellung eines synthetischen Hectorits aus einfachen Grundchemikalien bei erhöhter Temperatur.

Synthetische Hectorite stellen triktaedrische Schichtsilikate vom Smectit-Typus und der allgemeinen Formel

$$[Mg_{6-x}Li_xSi_8O_{20}(OH)_{4-y} F_y]^{x(-)} \frac{x}{z} -M^{z(+)}$$

dar, wobei M ein Kation der Wertigkeit z ist.

Produkte, in denen x weniger als 6 und y wenige als 4 beträgt, sind z.B. aus de DE—A—23 56 865 bekannt. Materialien dieser Substanzklasse stellen sehr vortilhafte Thixotropierunngsmittel für vielerlei Anwendungsbereiche dar. Sie lassen sich nicht nur in wässrigen Systemen, sondern, nach Belegung mit speziellen organischen Verbindungen, auch in wenig polaren Systemen, wie z.B. in Lacken oder Harzen, einsetzen. Die synthetischen Hectorite ergeben bei der Dispergierung in Leitungswasser klare Gele mit guten rheologischen Eigenschaften.

Für die technische Herstellung der Hectorite sind eine Reihe von Wegen aufgezeigt worden. Nach dem Verfahren der DE—B—11 84 742 wird zunächst eine Magnesiumionen enthaltende Lösung und eine alkalische Natriumsilikatlösung langsam unter Erhitzen und Rühren in einer wäßrigen, Lithium- und Fluoridionen enthaltenden Aufbereitung zusammengebracht, so daß im Reaktionsgemisch bestimmte atomare Verhältnisse vorliegen. Anschließend wird das Reaktionsgemisch bei Normaldruck unter Rühren erhitzt, bis die Reaktion genügend weit fortgeschritten ist.

Nach den Verfahren gemäß DE—B—16 67 502 und DE—A—2 356 865 wird aus einer wäßrigen Lösung, die eine Natriumverbindung, ein wasserlösliches Magnesiumsalz, ein Lithiumsalz und ein Silikat enthält, ein Niederschlag bei Temperaturen unterhalb 60°C oder in der Siedehitze gebildet. Der Niederschlag wird ohne Entfernung der löslichen Verunreinigungen anschlind unter Druck auf Temperaturen über 170°C erhitzt (DE—B—1 667 502) oder "hydothermisch" behandelt (DE—A—2 356 865), d.h. bei Normaldruck gekocht oder unter Druck bei höheren Temperaturen gehalten, um die Kristallbildung zu erreichen.

Die bekannten Verfahren erfordern teilweise lange Reaktionszeiten.

Es bestand daher die Aufgabe, die bekannten Verfahren insoweit zu verbessern, daß bei unveränderter Güte der Produkte mit kürzerer Reaktionszeit gearbeitet werden kann oder bei unverändert langer Reaktionszeit die rheologischen Eigenschaften der erhaltenen Produkte verbessert werden.

Es wurde nun ein Verfahren zur Herstellung eines synthetischen Hectorits der Formel

$$[Mg_{6-x}Li_xSi_8O_{20}(OH)_{4-y} F_y]^{x(-)} \quad . \quad \frac{x}{z} -M^{z(+)}$$

gefunden, in der $0 \leqslant x \leqslant 1.2$,
$0 \leqslant y \leqslant 4$ und
z 1, 2 oder 3 ist und
M ein Kation mit der Wertigkeit z bedeutet,
aus einer Magnesiumionen enthaltenden wäßrigen Lösung oder Suspension, einer $Na_2O$-Quelle, einer $SiO_2$-Quelle, gegebenenfalls unter Zusatz von Lithium- und/oder Fluoridionen, wobei die Molverhältnisse

$$0{,}56 \leqslant \frac{MgO}{SiO_2} \leqslant 0.75$$

$$0 \leqslant \frac{Li_2O}{SiO_2} \leqslant 0.2$$

$$0 \leqslant \frac{F}{SiO_2} \leqslant 1.25$$

$$0{,}25 \leqslant \frac{Na_2O}{SiO_2} \leqslant 2$$

einzuhalten sind, bei dem man eine wäßrige Lösung oder Suspension eines Magnesiumsalzes afheizt, man gegebenenfalls die Lithiumund/oder Fluoridionen der Lösung bzw. Suspension des Magnesiumsalzes vor Zugabe der anderen Komponenten zufügt, man zur erhitzten Mischung, vorzugsweise unter ständiger Durchmischung, eine $SiO_2$-Quelle und eine $Na_2O$-Quelle in Form wäßriger Lösungen zudosiert mit der Maßgabe, daß die $Na_2O$-Quelle nicht vor der $SiO_2$-Quelle zugegeben wird, man das entstehende Gemisch längere Zeit bei höherer Temperatur hält, man die Kristalle des gebildeten synthetischen Hectorits in der Natriumform von der Mutterlauge abtrennt und gegebenenfalls mit einer wäßrigen Lösung eines Salzes mit dem Kation $M^{z+}$ behandelt und nach erfolgtem Kationenaustausch den Bodenkörper von der wäßrigen Phase abtrennt, dadurch gekennzeichnet, daß die Zugabe der Komponenten zur wäßrigen Lösung oder Suspension des Magnesiumsalzes bei Temperaturen von 120—373°C unter Druck erfolgt, die Zugabe der $Na_2O$-Quelle und der $SiO_2$-Quelle jeweils maximal 1 Stunde dauert und man das entstehende Gemisch für maximal 10 Stunden im Temperaturbereich von 110—373°C hält.

Als Magnesiumsalz werden bevorzugt leicht lösliche anorganische Salze wie magnesiumchlorid, Magnesiumsulfat oder Magnesiumnitrat verwendet; man kann jedoch auch andere, in heißem Wasser leicht lösliche Magnesiumsalze verwenden. Es ist bevorzugt, wenn die eingesetzten Salze bei 100°C eine Löslichkeit von mindestens 50 g Magnesium pro Liter aufweisen.

Die Zugabe der Lithium- und/oder Fluoridionen zum Magnesiumsalz kann entweder vor dem Aufheizen oder nach dem Aufheizen auf Temperaturen von 110—373°C erfolgen. Vorzugsweise werden die Fluoridionen in Form einer Lösung oder frischgefällten Suspension von Natriumfluorid und/oder Lithiumfluorid eingebracht. Auch andere Fluoride wie Magnesiumfluorid, Fluorwasserstoffsäure oder Natriumsilicofluorid können eingesetzt werden.

Als $SiO_2$-Quelle kann eine wäßrige Lösung oder Suspension von Kaliumsilikat oder Natriumsilikat (Wasserglas) oder ein $SiO_2$-Sol eingesetzt werden. Bei der Berechnung der Molverhältnisse ist auch der $SiO_2$-Anteil, der dem eventuell eingesetzten $Na_2SiF_6$ entspricht, zu berücksichtigen.

Als $Na_2O$-Quelle werden wäßrige Lösungen oder Suspensionen eingesetzt, die Hydroxyl- und Natriumionen enthalten, beispielsweise in Form der Verbindungen Natriumcarbonat, Natriumhydroxid oder Natriumsilikat. Die Verwendung von Soda ist bevorzugt, da die Produkte in diesem Fall beser kristallisieren als bei Verwendung von NaOH. Die $Na_2O$-Quelle und die $SiO_2$-Quelle können gleichzeitig zu der erhitzten, unter Druck stehenden Lösung oder Suspension des Magnesiumsalzes zudosiert werden (z.B in Form von Natriumsilikat-Lösung). Es ist jedoch bevorzugt, zuerst die $SiO_2$-Quelle zuzugeben und erst dann die $Na_2O$-Quelle. Falls neben Natriumsilikat eine zusätzliche $Na_2O$-Quelle eingesetzt wird, soll diese vorzugsweise nachträglich zugefügt werden.

Vorzugsweise dauert die Zugabe der $SiO_2$-Quelle sowie der $Na_2O$-Quelle jeweils nur 10 bis 25 Minuten. Bei Zudosieren vorgewärmter Lösungen kann rascher gearbeitet werden, da ein Absinken de Temperatur der vorgelegten Lösung (in einem Autoklaven) leichter ausgeschlossen werden kann. Um eine gute Homogenisierung zu erreichen, sollte während der Zugabe der Komponenten gründlich gerührt werden, beispielsweise mit 5 bis 500, vorzugsweise 50 bis 200 Umdrehungen pro Minute. Für die eigentliche Reaktion bringt ein Rühren nur noch geringe Vorteile. Bevorzugt is während der Reaktion ein Rühren mit weniger als 50 Umdrehungen pro Minute.

Die Zugabe der $SiO_2$-Quelle und der $Na_2O$-Quelle unter Druck erfolgt vorzugsweise bei 120°—160°C. Die eigentliche hydrothermale Reaktion wird untrer Druck, vorzugsweise bei 150°—250°C, ausgeführt.

Beim Eindosieren der Komponenten ist in manchen Fällen aus apparativen Gründen nur ein mäßig hoher Druck möglich. Es ist daher bevorzugt, wenn Druck und Temperatur während der eigentlichen Reaktion höher liegen als während der Zugabe der Komponenten. Je stärker bei der eigentlichen Reaktion gerührt wird, umso kleinere Hectorit-Kristalle werden erhalten.

Die Dauer der Reaktion, bei der der kristalline Hectorit gebildet wird, ist von der angewandten Temperatur und dem gewünschten Kristallisationsgrad abhängig. Beispielsweise reicht bei einer Temperatur von 150°C eine Reaktionszeit von 0,5 bis 3 Stunden aus. Auch hierbei werden Produkte erhalten, die den gemäß DE—B—1 1 84 742 gewonnenen Hectoriten gleichwertig sind. Je höher die Temperatur und je länger die Reaktionszeit, umso höher ist der erhaltene Kristallisationsgrad.

Nach erfolgter Reaktion kühlt man den Ansatz auf Temperaturen unter 100°C ab und filtriert das gebildete Silikat von der Mutterlauge ab. Der Niederschlag wird salzfrei gewaschen und anschließend bei Temperaturen von maximal 400°C, vorzugsweise zwischen 1 00 und 200°C, getrocknet, sofern der Hectorit nicht einem zusätzlichen Kationenaustausch unterworfen werden soll.

Das nach dem erfindungsgemäßen Verfahren hergestellte Silikat besitzt ein Kationenaustauschvermögen von 0,3 bis 1,2 Äquivalenten pro kg. Fluorhaltiger Hectorit hat im allgemeinen eine Austauschkapazität von 0,6 bis 1,2 Äquivalenten pro kg, während das fluorfreie Silikat im allgemeinen Austausch-Kapazitäten von 0,3 bis 0,7 Äquivalenten pro kg aufweist. Die rheologischen Eigenschaften sind kaum abhängig vom Fluorgehalt. Jedoch sind fluorhaltige Produkte meist besser kristallisiert und daher reiner. Die Austausch-Kapazität ist gleichzeitig ein ungefähres Maß für die Quellfähigkeit der Hectorite. Bevorzugt sind Produkte mit einem y von 2 bis 3 und einem x von 0,4 bis 0,8. Durch Erhöhen oder Vermindern der Konzentrationen von Fluor und Lithium im Reaktionsansatz läßt sich auch y und x erhöhen bzw. vermindern.

Die nach dem erfindungsgemäßen Verfahren hergestellten Hectorite lasen sich in Wasser leicht dispergieren unter Bildung eines Sols, das in ein thixotropes Gel mit hoher Bingham-Fließgrenze übergeführt werden kann, z.B. durch Zugabe eines Elektrolyten. Dieses Gelbildungsvermögen ist besonders hoch bei Hectoriten, die Fluor, insbesondere zusammen mit Lithium enthalten.

Die Konzentration der einzelnen Reaktionsteilnehmer ist nicht kritisch. Beispielsweise kann im eigentlichen Reaktionsansatz die Konzentration an $SiO_2$ 1 bis 300 g $SiO_2$/l betragen. Um eine größere Raum-Zeit-Ausbeute zu erhalten, sind Konzentrationen in der Reaktionslösung von 25 bis 230 g $SiO_2$/l bevorzugt. Auf diese Weise lassen sich Hectorit-Suspensionen mit Gehalten von 5 bis 40, vorzugsweise 15 bis 25 Gew.-% gewinnen. Es ist überraschend, daß sich nach dem erfindungsgemäßcn Verfahren solch hohe Produkt-Konzentrationen erzeugen lassen, da nach dem Verfahren der DE—B—11 84 742 bei der Durchführung der Reaktion zweckmäßigerweise die verschiedenen verwendeten Bestandteile des Reaktionsgemisches in einer solchen Verdünnung einzusetzen sind, daß nach der hydrothermischen Behandlung der Hectorit in einer Konzentration von maximal 8 Gew.-% vorhanden ist. Auch bei Einsatz beträchtlicher Mengen an Lithium kommt es nicht zu den in der DE—A—23 56 865 auf Seite 13 beschriebenen Viskositäts problemen.

Im zunächst ausfallenden Hectorit ist das Kation M Natrium. In Gegenwart beträchtlicher Mengen an Lithium kann daneben ein kleiner Teil des Na+ durch Li+ ausgetauscht sein. Man kann jedoch durch Behandeln mit wäßrigen Lösungen von Salzen, die ein anderes Kation M enthalten, andere synthetische Hectorite herstellen. Beispielsweise kann man mit Salzen von Kalium, den Erdalkalimetallen, Aluminium oder organischen Kationen behandeln. Der Austausch mit dem neuen Kation kann entweder vor dem Waschen oder nach dem Waschen des primär synthetisierten Hectorits, aber auch nach dem Trocknen erfolgen. Durch Austausch mit anorganischen Kationen werden Produkte erhalten, die sich als Katalysatoren verwenden lassen.

Durch Austausch mit organischen Kationen erhält man wertvolle Gelbildner für organische Systeme, die für vielerlei Einsatzzwecke geeignet sind. Durch die organischen Kationen wird die Quellfähigkeit und das Fließverhalten in organischen Lösungsmitteln verbessert. Beispiele organischer Verbindungen oder Salze mit austauschbaren Kationen sind folgende Klassen: organisches Ammonium, organisches Phosphonium, organisches Stibonium, organisches Arsonium, organisches Oxonium, organisches Sulfonium oder Mischungen davon. Bevorzugt werden organische Ammoniumsalze, insbesondere Tetraalkylammoniumsalze. Weitere Angaben über den an sich bekannten Austausch gegen Organo-Kationen finden sich in DE—B—16 67 502, Spalte 10.

In der DE—A—23 56 665, Seite 14 wird die allgemeine Regel aufgestellt, daß ein gutes Dispergiervermögen eines synthetischen Hectorits Hand in Hand mit der optischen Klarheit der erhaltenen Dispersion einhergeht. Es hat sich gezeigt, daß auch 2%ige Dispersionen der nach dem erfindungsgemäßen Verfahren hergestellten synthetischen Hectorite eine hohe Lichtdurchlässigkeit aufweisen. Die gemessene Lichdurchlässigkeit erreicht im allgemeinen 80 bis 95% der von reinem Wasser. Durch Verringerung der Reaktionszeit und der angewandten Reaktionstemperatur läßt sich auch Material mit geringerer optischen Durchlässigkeit, also geringerer Dispergierfähigkeit produzieren, die aber für viele Anwendungszwecke noch ausreichend ist.

Die Erfindung wird durch die folgenden Beispiele näher erläutert.

## BEISPIELE

### Beispiel 1

3,63 kg $MgCl_2$. 6 $H_2O$ und 0,82 kg LiCl wurden in 17 l Wasser gelöst und in einem Rührautoklaven auf 120°C erhitzt. Zu dieser Lösung wurden nacheinander 31,9 kg einer 6,5 %-igen Na-Wasserglaslösung (Gewichtsverhältnis $SiO_2$/ $Na_2O$ = 3,3:1) und 16,6 kg einer 6,6%igen $Na_2Co_3$-Lösung innerhalb von 40 min zugepumpt, wobei im Rührautoklaven die Temperatur nie unter 1 20°C absank. Die Temperatur wurde 3 Stunden auf 1 70°C gehalten, wobei langsam gerührt wurde. Das Reaktionsgemisch wurde nach 3 h auf 90°C gekühlt, abfiltriert, gewaschen und getrocknet.

Das Produkt hat eine Ionenaustauschkapazität von 50 mval/ 100 g und kann leicht in Wasser dispergiert werden. Die Lichtdurchlässigkeit einer 2%igen wässrigen Suspension beträgt 60% der von Wasser. Das Produkt zeigt in Röntgenbeugungsaufnahmen eine (060)-Halbwertsbreite von 1, 2° und einen Enslin-Wert von 4500. (Der Hectorit nimmt bei der Quellung in Wasser die 4500: 100 = 45-fache Menge Wasser auf. Die Bestimmung des Enslin-Werts ist angegeben in "Die Chemische Fabrik" 13, (1933), S. 1471—149. Im vorliegenden Fall werden jeweils 125 mg Hektorit eingesetzt und die Quellung nach 6 Std. bestimmt).

### Beispiel 2

3,4 kg $MgCl_2$. 6 $H_2O$ wurden in 4 l $H_2O$ gelöst. Zu dieser lösung fügt man eine saure Suspension von LiF und NaF, die aus 370 g Natriumhydroxid, 80 g $Li_2CO_3$ und 1,2 kg 20 %-iger Flußsäure hergestellt wurde. Dieses Gemisch wurde in einem Autoklaven auf 120°C erhitzt. Unter Beibehaltung dieser Temperatur wurden anschließend nacheinander 11,4 kg einer 76,8%igen Na-Wasserglaslösung ($SiO_2$/$Na_2O$ = 3,3) und dann 5, 1 kg einer 24%igen $Na_2CO_3$-Lösung innerhalb von 40 min hinzugeben. Anschließend wurde auf 150°C hochgeheizt. Nach 1 Stunde Reaktionszeit wurde von der Mutterlauge abgetrennt, gewaschen und getrocknet.

Das Produkt hat eine Ionenaustauschkapazität von 90 mval/ 100 g und ist hoch quellfähig. Die Lichtdurchlässigkeit (490 nm) einer 2%igen wäßrien Suspension beträgt 92% dert von Wasser. Die (060)-Halbwertsbreite beträgt 1,1°. Der Enslinwert liegt bei 4700.

Vergleichsbeispiel

3,63 kg $MgCl_2.6 H_2O$ und 0,82 kg LiCl wurden in 17 l $H_2O$ gelöst und in einem Rührgefäß auf 60°C erhitzt. 18,6 kg einer 8,8%igen $Na_2CO_3$-Lösung wurden unter Rühren und Beibehaltung der Temperatur zur $MgCl_2$-Lösung innerhalb von 20 min gegeben. Anschließend wurden in das Reaktionsgemisch 31,9 kg einer 6,5%igen Na-Wasserglaslsung (von Beispiel 1), ebenfalls unter Beibehaltung der Temperatur, eingerührt. Das Gemisch wurde 2 h lang unter Atmosphärendruck gekocht und dann in einen Autoklaven übergeführt, worauf auf 170°C erhitzt wurde. Nach 3 h wurde der Autoklav auf 90°C gekühlt, das Produkt von der Mutterlauge abgetrennt, gewaschen und getrocknet. Die Austauschkapazität des Produkts beträgt 50 mval/100 g. Eine 2 %ige wäßrige Dispersion zeigt im Vergleich zu Wasser eine Lichtdurchlässigkeit von 58 %. Die (060)-Halbwertsbreite beträgt 1,7°. Für den Enslin-Wert erhält man 1500.

Man erkennt, daß der nicht erfindungsgemäß hergetellte Hectorit schlechter dispergierbar ist, aus kleineren Kristallen besteht und schlechter quellfähig ist als der Hectorit der Beispiele 1 und 2.

In allen Beispielen wurden Produkte erhalten, in denen das Atomverhältnis Li/Si unter 0. 15 und das Atomverhältnis F/Si unter 0.5 lag.

**Patentansprüche**

1. Verfahren zur Herstellung eines synthetischen Hectorits der Formel

$$[Mg_{6-x}Li_xSi_8O_{20}(OH)_{4-y} F_y]^{x(-)} \quad . \quad \frac{x}{z} - M^{z(+)}$$

in der $0 \leqslant x \leqslant 1.2$,
$0 \leqslant y \leqslant 4$ und
z 1, 2 oder 3 ist und
M ein Kation mit der Wertigkeit z bedeutet,
aus einer Magnesiumionen enthaltenden wäßrigen Lösung oder Suspension, einer $Na_2O$-Quelle, einer $SiO_2$-Quelle, gegebenenfalls unter Zusatz von Lithium- und/oder Fluoridionen, wobei die Molverhältnisse

$$0,56 \leqslant \frac{MgO}{SiO_2} \leqslant 0.75$$

$$0 \leqslant \frac{Li_2O}{SiO_2} \leqslant 0.2$$

$$0 \leqslant \frac{F}{SiO_2} \leqslant 1.25$$

$$0,25 \leqslant \frac{Na_2O}{SiO_2} \leqslant 2$$

einzuhalten sind, bei dem man eine wäßrige Lösung oder Suspension eines Magnesiumsalzes afheizt, man gegebenenfalls die Lithiumund/oder Fluoridionen der Lösung bzw. Suspension des Magnesiumsalzes vor Zugabe der anderen Komponenten zufügt, man zur erhitzten Mischung, vorzugsweise unter ständiger Durchmischung, eine $SiO_2$-Quelle und eine $Na_2O$-Quelle in Form wäßriger Lösungen zudosiert mit der Maßgabe, daß die $Na_2O$-Quelle nicht vor der $SiO_2$-Quelle zugegeben wird, man das entstehende Gemisch längere Zeit bei höherer Temperatur hält, man die Kristalle des gebildeten synthetischen Hectorits in der Natriumform von der Mutterlauge abtrennt und gegebenenfalls mit einer wäßrigen Lösung eines Salzes mit dem Kation $M^{z+}$ behandelt und nach erfolgtem Kationenaustausch den Bodenkörper von der wäßrigen Phase abtrennt, dadurch gekennzeichnet, daß die Zugabe der Komponenten zur wäßrigen Lösung oder Suspension des Magnesiumsalzes bei Temperaturen von 120—373°C unter Druck erfolgt, die Zugabe der $Na_2O$-Quelle und der $SiO_2$-Quelle jeweils maximal 1 Stunde dauert und man das entstehende Gemisch für maximal 10 Stunden im Temperaturbereich von 110—373°C hält.

2. Verfahren nach Anspruch 1, dadurch gekennzeichnet, daß in der Reaktionslösung eine Konzentration von 25 bis 230 g $SiO_2$/l eingehalten wird.

# EP 0 088 372 B2

**Revendications**

1. Procédé de préparation d'une hectorite synthétique répondant aß la formule suivante:

$$[Mg_{6-x}Li_xSi_8O_{20}(OH)_{4-y}\,F_y]^{x(-)} \quad . \quad \frac{x}{z}\text{-M}^{z(+)}$$

dans laquelle

$$0 \leqslant x \leqslant 1{,}2,$$

$$0 \leqslant y \leqslant 4,$$

z est égal à 1, à 2 ou à 3 et
M représente un cation dont la valence est égale à z,
à partir d'une solution ou suspension aqueuse contenant des ions de magnésium, d'une source de Na$_2$O, d'une source de SiO$_2$, éventuellement en présence d'ions de lithium et/ou de fluorure, avec respect des rapports molaires suivants:

$$0{,}56 \leqslant \frac{MgO}{SiO_2} \leqslant 0.75$$

$$0 \quad \leqslant \frac{Li_2O}{SiO_2} \leqslant 0.2$$

$$0 \quad \leqslant \frac{F}{SiO_2} \leqslant 1.25$$

$$0{,}25 \leqslant \frac{Na_2O}{SiO_2} \leqslant 2$$

selon lequel on chauffe une solution ou suspension aqueuse d'un sel de magnésium, on ajoute éventuellement les ions de lithium et/ou de fluorure à la solution ou à la suspension du sel de magnésium avant d'ajouter les autres composantes, on fait arriver progressivement dans le mélange chauffé, de préférence tout en l'agitant constamment, une source de SiO$_2$ et une source de Na$_2$O sous la forme de solutions aqueuses en veillant à ce que la source de Na$_2$O ne soit pas ajoutée avant la source de SiO$_2$, on maintient à température élevée pendant un temps assez long le mélange qui se forme, on sépare de la liqueur mère les cristaux de l'hectorite synthétique formée sous la forme du sel sodique et éventuellement on les traite par une solution aqueuse d'un sel avec le cation M$^{z+}$, puis, lorsque l'échange de cations a été effectué, on sépare de la phase aqueuse le corps qui s'est déposé, procédé caractérisé en ce que l'addition des composantes à la solution ou suspension aqueuse de sel de magnésium est effectuée à des températures de 120 à 373°C sous pression, l'addition de la source de Na$_2$O et l'addition de la source de SiO$_2$ durent chacune au plus 1 heure et le mélange qui se forme est maintenu pendant au plus 10 heures dans l'intervalle de température allant de 110 à 373°C.

2. Procédé selon la revendication 1, caractérisé en ce qu'on maintient, dans la solution réactionnelle, une concentration de 25 à 230 g de SiO$_2$ par litre.

**Claims**

1. Process for the preparation of a synthetic hectorite of the formula

$$[Mg_{6-x}Li_xSi_8O_{20}(OH)_{4-y}\,F_y]^{x(-)} \quad . \quad \frac{x}{z}\text{-M}^{z(+)}$$

in which

6

$$0 \leqslant x \leqslant 1,2$$

$$0 \leqslant y \leqslant 4$$

z is 1, 2 or 3 and

M is a cation with z valences, from an aqueous solution or suspension, which contains magnesium ions, a $Na_2O$ source and a $SiO_2$ source, optionally under addition of lithium and/or fluoride ions, while maintaining the following molar ratios

$$0,56 \leqslant \frac{MgO}{SiO_2} \leqslant 0.75$$

$$0 \leqslant \frac{Li_2O}{SiO_2} \leqslant 0.2$$

$$0 \leqslant \frac{F}{SiO_2} \leqslant 1.25$$

$$0,25 \leqslant \frac{Na_2O}{SiO_2} \leqslant 2$$

by heating an aqueous solution or suspension of a magnesium salt, optionally adding the lithium and/or fluoride ions to the solution or suspension of the magnesium salt prior to the addition of the other components, dosing to the heated mixture, preferably under permanent mixing, a $SiO_2$ source and a $Na_2O$ source as an aqueous solution, a prerequisite being that the $Na_2O$ source is not added prior to the $SiO_2$ source, keeping the resultant mixture at high temperature for an extended period of time, separating the crystals of the formed synthetic hectorite in the sodium form from the mother liquor, optionally treating the crystals with an aqueous solution of a salt with the cation $M^{z(+)}$ and separating the solids from the aqueous phase after the cation exchange has taken place, wherein the compounds are added to the aqueous solution or suspension of the magnesium salt at a temperature of 120—373°C under pressure and the addition of the $Na_2O$ source and of the $SiO_2$ source takes in each case at most one hour and the resulting mixture is kept within a temperature range of from 110 to 373°C for at most ten hours.

2. Process as claimed in claim 1 wherein the concentration of $SiO_2$ in the reaction solution is kept at 25 to 230 g per litre.